# EUROPÄISCHE PATENTSCHRIFT

(11) **EP 3 617 162 B1**
(45) Veröffentlichungstag und Bekanntmachung des Hinweises auf die Patenterteilung: **27.09.2023**
(21) Anmeldenummer: 18191475.5
(22) Anmeldetag: 29.08.2018
(51) Int. Cl.: C03C 1/00, C03C 3/097, C03C 4/00, C03C 10/00, C03B 19/02, C03B 23/00, C03B 32/02

(54) **VERFAHREN ZUR HERSTELLUNG EINES GLASKERAMIK-ROHLINGS FÜR DENTALE ZWECKE**
METHOD FOR PRODUCING A GLASS CERAMIC BLANK FOR DENTAL PURPOSES
PROCÉDÉ DE FABRICATION D'UNE ÉBAUCHE EN VITROCÉRAMIQUE À USAGE DENTAIRE

(43) Veröffentlichungstag der Anmeldung: 04.03.2020
(73) Patentinhaber: Ivoclar Vivadent AG, 9494 Schaan (LI)
(72) Erfinder: Ritzberger, Christian, 9472 Grabs (CH)
(74) Vertreter: Uexküll & Stolberg

(56) Entgegenhaltungen:
- EP-A1- 1 688 397
- DE-A1-102004 056 934
- DE-A1-102014 116 378
- US-A1- 2007 042 889
- US-A1- 2008 120 994
- CATHERINE M. GORMAN ET AL: "Effects of repeated processing on the strength and microstructure of a heat-pressed dental ceramic", JOURNAL OF PROSTHETIC DENTISTRY., Bd. 112, Nr. 6, 1. Dezember 2014 (2014-12-01), Seiten 1370-1376, XP055562216, AMSTERDAM, NL ISSN: 0022-3913, DOI: 10.1016/j.prosdent.2014.06.015

## Beschreibung

Die Erfindung betrifft ein Verfahren zur Herstellung eines Glaskeramik-Rohlings für dentale Zwecke mit Lithiumsilikat als Kristallphase. Das Verfahren zeichnet sich insbesondere dadurch aus, dass es die schnelle und kostengünstige Erzeugung eines solchen Rohlings gestattet.

Lithiumsilikat-Glaskeramiken verfügen über ausgezeichnete mechanische Eigenschaften und mit ihrer Hilfe können die optischen Eigenschaften von natürlichem Zahnmaterial sehr gut nachgeahmt werden. Aus diesem Grund werden solche Glaskeramiken bereits umfänglich zur Erzeugung von ästhetisch anspruchsvollen Dentalrestaurationen mit sehr guten mechanischen Eigenschaften eingesetzt.

Dabei werden die Lithiumsilikat-Glaskeramiken in der Regel in Form entsprechender Rohlinge, wie Blöcke, Scheiben oder Zylinder, verwendet, aus denen dann die gewünschten dentalen Restaurationen, wie Kronen oder Brücken, geformt werden. Die Formgebung erfolgt dabei in der Regel durch Pressen bei erhöhter Temperatur und erhöhtem Druck oder durch maschinelle Bearbeitung in computergestützten Fräsvorrichtungen.

Zur Herstellung der Lithiumsilikat-Glaskeramiken wird üblicherweise in einem ersten Schritt ein entsprechendes Ausgangsglas aus einem Gemenge aus pulverförmigen Materialien bei Temperaturen von insbesondere 1300 bis 1600°C erschmolzen. Bei den dabei eingesetzten pulverförmigen Materialien handelt es sich insbesondere um Oxide, Carbonate, Phosphate, Borate und Fluoride. Zur Erzielung einer ausreichend homogenen Glases und insbesondere der Entfernung von Blasen innerhalb des Glases muss das pulverförmige Gemenge mehrere Stunden und typischerweise 7 bis 12 Stunden auf die Schmelztemperatur erhitzt werden, was aufgrund der langen Dauer und der eingesetzten hohen Energiemenge unökonomisch ist. Das erhaltene Ausgangsglas wird dann in geeignete Formen gegossen und über eine oder mehrere Wärmebehandlungen in die gewünschten Rohlinge aus Lithiumsilikat-Glaskeramik umgewandelt. Eine derartige Verfahrensweise wird beispielsweise in der EP 1 505 041 und EP 1 688 398 offenbart.

Der Erfindung liegt daher die Aufgabe zugrunde, ein Verfahren zur Herstellung eines Glaskeramik-Rohlings für dentale Zwecke Verfügung zu stellen, welches die Nachteile der konventionellen Verfahren meidet und insbesondere die Erzeugung eines homogenen Ausgangsglases in kurzer Zeit und unter Verwendung einer geringen Energiemenge ermöglicht.

Diese Aufgabe wird überraschenderweise mit dem Verfahren gemäß den Ansprüchen 1 bis 9 gelöst. Die Erfindung betrifft ebenfalls das Verfahren zur Herstellung von dentalen Restaurationen nach Anspruch 10 sowie die Verwendung nach Anspruch 11.

Das erfindungsgemäße Verfahren zur Herstellung eines Glaskeramik-Rohlings für dentale Zwecke mit Lithiumsilikat als Kristallphase zeichnet sich dadurch aus, dass bei ihm
(a) Rohlinge oder Reste von Rohlingen aus Lithiumsilikat-Glaskeramik zu einem Glas geschmolzen werden,
(b) gegebenenfalls das geschmolzene Glas zu einer Glasfritte umgewandelt und die Glasfritte zu einem Glas geschmolzen wird,
(c) das Glas aus Stufe (a) oder (b) zu einem Glas-Rohling geformt wird,
(d) der Glas-Rohling bei einer Temperatur von insbesondere 450 bis 600°C wärmebehandelt wird, um einen Glas-Rohling mit Keimen zu bilden,
(e) der Glas-Rohling mit Keimen einer Wärmebehandlung bei einer Temperatur von insbesondere 600 bis 850°C unterworfen wird, um einen Glaskeramik-Rohling mit Lithiummetasilikat als Kristallphase zu bilden, oder einer Wärmebehandlung bei einer Temperatur von insbesondere 700 bis 1000°C unterworfen wird, um einen Glaskeramik-Rohling mit Lithiumdisilikat als Kristallphase zu bilden,
(f) gegebenenfalls der Glaskeramik-Rohling mit Lithiummetasilikat als Kristallphase aus Stufe (e) einer Wärmebehandlung bei einer Temperatur von insbesondere 700 bis 1000°C unterworfen wird, um einen Glaskeramik-Rohling mit Lithiumdisilikat als Kristallphase zu bilden, und
(g) gegebenenfalls in der Stufe (a) und/oder (b) mindestens eine chemische Verbindung zugegeben wird, um die chemische Zusammensetzung des Glases und/oder der Glasfritte zu ändern.

Anders als bei konventionellen Verfahren werden beim erfindungsgemäßen Verfahren bereits erzeugte Rohlinge oder Reste von Rohlingen aus Lithiumsilikat-Glaskeramik eingesetzt, um daraus das Glas zu erschmelzen. Es ist überraschend, dass mit der Verwendung dieser Rohlinge oder der Reste solcher Rohlinge in sehr kurzer Zeit das Erschmelzen eines Glases gelingt, welches homogenen ist und daher auch im Wesentlichen frei von Bläschen ist. Das gelingt bei den konventionellen Verfahren nur, wenn die bei diesen Verfahren verwendeten Ausgangsmaterialien über einen langen Zeitraum auf der Schmelztemperatur gehalten werden. Das Erzeugung von homogenen Gläsern ist besonders wichtig, da etwaige Inhomogenitäten in den Gläsern dazu führen, dass die aus ihnen hergestellten Glaskeramik-Rohlinge nicht die hohen Anforderungen an die optischen Eigenschaften erfüllen können, um für dentale Zwecke und insbesondere als dentales Restaurationsmaterial eingesetzt zu werden. Bei den in der Stufe (a) eingesetzten Rohlingen handelt es sich üblicherweise um nicht mehr benötigte dentale Rohlinge, die aber aufgrund ihrer wertvollen Komponenten, wie Lithiumoxid und zum Einfärben dienende Übergangsmetalloxide, für eine erneute Nutzung sehr vorteilhaft wären.

Bevorzugt werden in der Stufe (a) Reste von Lithiumsilikat-Rohlingen und insbesondere Reste von maschinell bearbeiteten Lithiumsilikat-Rohlingen eingesetzt. Es handelt sich damit typischerweise um Reste, die verbleiben, wenn Lithiumsilikat-Rohlinge gefräst und/oder geschliffen werden, um daraus eine dentale Restauration zu fertigen. Es ist ein weiterer Vorteil des erfindungsgemäßen Verfahrens, dass mit dem Einsatz dieser Reste von Rohlingen darin enthaltene Komponenten erneut wieder einer Nutzung zugeführt werden, was nicht nur ökonomisch, sondern auch ökologisch von Vorteil ist. Das gilt insbesondere für darin vorhandenes Lithiumoxid, aber auch darin vorhandene Übergangsmetalloxide.

Die in Stufe (a) eingesetzten Lithiumsilikat-Rohlinge und Reste solcher Rohlinge werden üblicherweise zunächst von etwaigem Fremdmaterial, wie zum Beispiel metallischen Haltern zur Befestigung in einer CAD/CAM-Vorrichtung, befreit. Ebenso können die Rohlinge und Reste solcher Rohlinge auch zerkleinert werden, bevor aus ihnen das Glas erschmolzen wird.

In Stufe (a) werden Rohlinge und/oder Reste von Rohlingen aus Lithiumsilikat-Glaskeramik eingesetzt. Es ist weiter bevorzugt, dass die Lithiumsilikat-Glaskeramik aus Lithiummetasilikat-Glaskeramik und Lithiumdisilikat-Glaskeramik ausgewählt ist und insbesondere Lithiummetasilikat-Glaskeramik ist. In einer besonders bevorzugten Ausführungsform werden Rohlinge und/oder Reste von Rohlingen aus Lithiumsilikat-Glaskeramik mit Lithiummetasilikat oder Lithiumdisilikat als Hauptkristallphase verwendet.

Der Begriff "Hauptkristallphase" bezeichnet die Kristallphase, die gegenüber anderen Kristallphasen den höchsten Massenanteil hat. Die Bestimmung des Massenanteils erfolgt insbesondere durch die Rietveld-Methode unter Benutzung eines internen Standards.

In der Stufe (a) werden vorzugsweise Rohlinge in Form von Blöcken, Quadern, oder Zylindern, insbesondere in Form von Scheiben, oder Reste so geformter Rohlinge eingesetzt.

In einer bevorzugten Ausführungsform werden Rohlinge und/oder Reste von Rohlingen eingesetzt, die Informationen über ihre jeweilige chemische Zusammensetzung, zum Beispiel in Form von Aufdrucken oder angebrachten Datenträgern, wie Chips, aufweisen.

In einer weiteren bevorzugten Ausführungsform des erfindungsgemäßen Verfahrens werden in Stufe (a) Rohlinge und/oder Reste von Rohlingen mit unterschiedlicher chemischer Zusammensetzung eingesetzt und insbesondere wird auch die Stufe (g) durchgeführt. Damit ist auch die Möglichkeit gegeben, Rohlinge oder Reste von Rohlingen einzusetzen, ohne diese vorher entsprechend ihrer chemischen Zusammensetzung zu sortieren. Das aus diesen Rohlingen oder Resten von Rohlingen unterschiedlicher chemischer Zusammensetzung erzeugte Glas wird typischerweise auf seine chemische Zusammensetzung analysiert. Vorzugsweise wird dann auf der Grundlage dieser Analyse in der Stufe (g) mindestens eine chemische Verbindung zu dem Glas und/oder der Glasfritte gegeben, um deren chemische Zusammensetzung in gewünschter Weise abzuändern. Diese mindestens eine Verbindung ist vorzugsweise ebenfalls ein Glas, welches insbesondere in Form einer Glasfritte zugegeben wird. Es können somit trotz des Einsatzes unterschiedlicher Rohlinge oder Reste solcher Rohlinge Glaskeramik-Rohlinge für dentale Zwecke mit genau der gewünschten chemischen Zusammensetzung und damit insbesondere auch den gewünschten Eigenschaften, wie spezielle Farbe und Transluzenz, hergestellt werden.

Erstaunlicherweise führt das Schmelzen von bereits vorhandenen Lithiumsilikat-Rohlingen oder Resten solcher Rohlinge und die anschließenden Wärmebehandlungen im Rahmen des erfindungsgemäßen Verfahrens nicht zu einer signifikanten Änderung deren Eigenschaften und insbesondere deren Farbe, wenn diese Schritte wie üblich an der Luft durchgeführt werden. Dies ist daran erkennbar, dass bei der Verwendung von Rohlingen oder Resten von Rohlingen mit gleicher chemische Zusammensetzung in Stufe (a) das erfindungsgemäße Verfahren zu Glaskeramik-Rohlingen führt, die die gleiche Farbe wie die als Ausgangsmaterial eingesetzten Rohlinge oder Reste davon haben. Dies ist überraschend, da es während des Verfahrens bei hohen Temperaturen zu Kontakt mit Sauerstoff aus der Luft kommt und dadurch die große Gefahr besteht, dass es zu Oxidationsprozessen und damit zu einer Veränderung der Oxidationszahl und Farbe von als Färbemitteln eingesetzten Übergangsmetallverbindungen kommt. Dies ist jedoch erstaunlicherweise nicht der Fall, so dass Rohlinge und Reste von Rohlingen mit einer bestimmten Spezifikation hinsichtlich ihrer Farbe nach Durchlaufen des erfindungsgemäßen Verfahrens zu Glaskeramik-Rohlingen mit der gleichen Spezifikation hinsichtlich der Farbe führen.

Es ist weiter bevorzugt, dass in Stufe (a) die Rohlinge oder Reste von Rohlingen und/oder in der nachstehend erläuterten optionalen Stufe (b) die Glasfritte bei einer Temperatur von 1200 bis 1600°C, insbesondere 1250 bis 1450°C, zu einem Glas geschmolzen werden. Es ist überraschend, dass das Schmelzen für eine kurze Zeitdauer von insbesondere 30 bis 300 min und vorzugsweise 30 bis 240 min ausreichend ist, um eine Schmelze mit hoher Homogenität herzustellen. Damit ist das erfindungsgemäße Verfahren den konventionellen Verfahren überlegen, da diese eine deutlich längere Schmelzdauer benötigen, um ein Glas mit zufriedenstellender Homogenität zu ergeben.

In der optionalen Stufe (b) kann das geschmolzene Glas zu einer Glasfritte umgewandelt und die Glasfritte zu einem Glas geschmolzen werden. Diese optionale Stufe dient insbesondere dazu, die Homogenität des in Stufe (a) erhaltenen Glases noch weiter zu erhöhen. Die Umwandlung zu einer Glasfritte erfolgt typischerweise, indem das geschmolzene Glas in Wasser gegossen, abgetrennt und gegebenenfalls noch zerkleinert wird.

Weiter kann gemäß der optionalen Stufe (g) auch in der Stufe (b) der erhaltenen Glasfritte noch mindestens eine chemische Verbindung zugegeben wird, um deren chemische Zusammensetzung zu ändern. Dies dient wie vorstehend bereits für Stufe (a) beschrieben dazu, die chemische Zusammensetzung des schließlich hergestellten Glaskeramik-Rohlings in gewünschter Weise einzustellen.

In der Stufe (c) wird das Glas aus Stufe (a) oder (b) zu einem Glas-Rohling geformt. Das erfolgt typischerweise, indem das Glas in geeignete Formen, wie zum Beispiel Metall- oder GraphitFormen, gegossen wird. Dabei wird dem Rohling bevorzugt die Form eines Blocks, Quaders, Zylinders oder einer Scheibe gegeben. Besonders bevorzugt sind Blöcke, Kreiszylinder oder kreisförmige Scheiben. Der geformte Glas-Rohling kann auch bereits eine einstückig mit ihm ausgebildete Haltevorrichtung, wie einen Haltestift, aufweisen.

In der Stufe (d) wird der Glas-Rohling bei einer Temperatur von insbesondere 450 bis 600°C wärmebehandelt, um einen Glas-Rohling mit Keimen zu bilden. Bei den Keimen handelt es sich insbesondere um solche, die für die Kristallisation von Lithiummetasilikat und/oder Lithiumdisilikat geeignet sind.

Der Glas-Rohling mit Keimen wird dann in Stufe (e) entweder einer Wärmebehandlung bei einer Temperatur von insbesondere 600 bis 850°C unterworfen, um einen Glaskeramik-Rohling mit Lithiummetasilikat als Kristallphase zu bilden, oder einer Wärmebehandlung bei einer Temperatur von insbesondere 700 bis 1000° C unterworfen, um einen Glaskeramik-Rohling mit Lithiumdisilikat als Kristallphase zu bilden.

Neben einer direkten Herstellung der Lithiumdisilikat-Glaskeramik kann diese auch stufenweise unter zunächst Bildung von Lithiummetasilikat-Glaskeramik und anschließend deren Umwandlung zu Lithiumdisilikat-Glaskeramik erzeugt werden. Demnach ist es ebenfalls möglich, die optionale Stufe (f) durchzuführen, bei der der Glaskeramik-Rohling mit Lithiummetasilikat als Kristallphase aus Stufe (e) einer Wärmebehandlung bei einer Temperatur von insbesondere 700 bis 1000°C unterworfen wird, um einen Glaskeramik-Rohling mit Lithiumdisilikat als Kristallphase zu bilden.

Daher sind das Lithiumsilikat-Glas, das Lithiumsilikat-Glas mit Keimen und die Lithiummetasilikat-Glaskeramik Vorläufer der Lithiumdisilikat-Glaskeramik.

Es ist bevorzugt, dass der nach dem erfindungsgemäßen Verfahren hergestellte Glaskeramik-Rohling für dentale Zwecke Lithiummetasilikat oder Lithiumdisilikat als Kristallphase aufweist. Besonders bevorzugt ist ein Glaskeramik-Rohling, der Lithiummetasilikat oder Lithiumdisilikat als Hauptkristallphase aufweist.

Weiter enthält der hergestellte Glaskeramik-Rohling vorzugsweise Färbemittel und/oder Fluoreszenzmittel, wie insbesondere Oxide von d- und f-Elementen, bevorzugt Oxide von Ti, V, Sc, Mn, Fe, Co, Ta, W, Ce, Pr, Nd, Tb, Er, Dy, Gd, Eu und Yb.

In den nachstehend angegebenen bevorzugten Zusammensetzungen des hergestellten Glaskeramik-Rohlings sind die Mengen der Komponenten, mit Ausnahme von Fluor, als Oxide angegeben, so wie es bei Gläsern und Glaskeramiken üblich ist.

Der hergestellte Glaskeramik-Rohling enthält in einer bevorzugten Ausführungsform mindestens eine und vorzugsweise alle der folgenden Komponenten in den angegebenen Mengen:

| Komponente | Gew.-% |
|---|---|
| SiO₂ | 64,0 bis 73,0 |
| Li₂O | 12,0 bis 18,0 |
| K₂O | 1,0 bis 5,0 |
| Al₂O₃ | 0,5 bis 5,0 |
| P₂O₅ | 1,0 bis 7,0 |
| ZnO | 0,5 bis 6,0 |
| Na₂O | 0 bis 2,0 |
| Me^{II}O | 0 bis 7,0 |
| ZrO₂ | 0 bis 2,0 |
| färbende und fluoreszierende Metalloxide | 0,5 bis 7,5, |

wobei Me^{II}O ausgewählt ist aus der Gruppe von CaO, BaO, SrO, MgO und Mischungen davon.

In einer weiteren bevorzugten Ausführungsform enthält der hergestellte Glaskeramik-Rohling mindestens eine und vorzugsweise alle der folgenden Komponenten in den angegebenen Mengen:

| Komponente | Gew.-% |
|---|---|
| SiO₂ | 64,0 bis 75,0 |
| Li₂O | 13,0 bis 17,0 |
| K₂O | 2,0 bis 5,0 |
| Al₂O₃ | 0,5 bis 5,0, |
| Keimbildnder | 2,0 bis 5,0 |
| Me^{II}O | 0 bis 3,0 |

und weniger als 0,1 Gew.-% ZnO, wobei Me^{II}O ausgewählt ist aus der Gruppe von CaO, BaO, MgO, SrO und Mischungen davon.

In einer weiteren bevorzugten Ausführungsform enthält der hergestellte Glaskeramik-Rohling mindestens eine und vorzugsweise alle folgenden Komponenten in den angegebenen Mengen:

| Komponente | Gew.-% |
|---|---|
| SiO₂ | 55,0 bis 71,0 |
| Li₂O | 9, 0 bis 17, 0 |
| K₂O | 1,0 bis 7,0 |
| Al₂O₃ | 0,5 bis 5,0 |
| P₂O₅ | 0,5 bis 12,0 |
| ZrO₂ | 6,1 bis 20, 0. |

In einer weiteren bevorzugten Ausführungsform enthält der hergestellte Glaskeramik-Rohling mindestens eine und vorzugsweise alle der folgenden Komponenten in den angegebenen Mengen:

| Komponente | Gew.-% |
|---|---|
| SiO₂ | 59, 0 bis 79, 0 |
| Li₂O | 8, 0 bis 15,0 |
| P₂O₅ | 0 bis 9, 0 |
| Me^{I}₂O | 1,0 bis 8,0 |
| Me^{II}O | 1,0 bis 9, 0 |
| Me^{III}₂O₃ | 0 bis 8,0, |
| Me^{IV}O₂ | 0 bis 10,0 |
| Me^{V}₂O₅ | 0 bis 8, 0 |
| Me^{VI}O₃ | 0 bis 5,0 |
| Fluor | 0 bis 1,0, |

wobei Me^{I}₂O ausgewählt ist aus der Gruppe von K₂O, Na₂O, Rb₂O, Cs₂O und Mischungen davon, Me^{II}O ausgewählt ist aus der Gruppe von CaO, MgO, SrO, ZnO und Mischungen davon, Me^{III}₂O₃ ausgewählt ist aus der Gruppe von Al₂O₃, B₂O₃, Y₂O₃, La₂O₃, Ga₂O₃, In₂O₃ und Mischungen davon, Me^{IV}O₂ ausgewählt aus der Gruppe von ZrO₂, TiO₂, SnO₂, CeO₂, GeO₂ und Mischungen davon, Me^{V}₂O₅ ausgewählt ist aus der Gruppe von V₂O₃, Ta₂O₃, Nb₂O₃ und Mischungen davon, und Me^{VI}O₃ ausgewählt ist aus der Gruppe von WO₃, MoO₃ und Mischungen davon.

In einer weiteren bevorzugten Ausführungsform weist der erfindungsgemäß hergestellte Glaskeramik-Rohling eine Haltevorrichtung für die Befestigung in einer Bearbeitungsvorrichtung, wie insbesondere einer Fräs- oder Schleifvorrichtung, auf. Diese Haltevorrichtung kann an den hergestellten Glaskeramik-Rohling angebracht werden, z.B. angeklebt werden, oder sie kann auch bereits einstückig mit dem Glaskeramik-Rohling ausgebildet sein und daher aus demselben Material wie der Rohling bestehen.

Der hergestellte Glaskeramik-Rohling dient insbesondere der Herstellung von dentalen Restaurationen. Die Erfindung ist daher ebenfalls auf ein Verfahren zur Herstellung von dentalen Restaurationen gerichtet, bei dem mittels des erfindungsgemäßen Verfahrens hergestelltem Glaskeramik-Rohling durch Pressen oder maschinelle Bearbeitung die Form der dentalen Restaurationen gegeben wird.

Die erfindungsgemäß hergestellten dentalen Restaurationen sind bevorzugt ausgewählt aus Kronen, Abutments, Abutmentkronen, Inlays, Onlays, Veneers, Schalen und Brücken sowie Überwürfen für mehrteilige Restaurationsgerüste, die z.B. aus Oxidkeramik, Metallen oder Dentallegierungen bestehen können.

Das Pressen erfolgt üblicherweise unter erhöhtem Druck und erhöhter Temperatur. Es ist bevorzugt, dass das Pressen bei einem Druck von 2 bis 10 bar und einer Temperatur von 700 bis 1200°C erfolgt. Beim Pressen wird durch viskoses Fließen des eingesetzten Materials die gewünschte Formänderung erreicht.

Die maschinelle Bearbeitung erfolgt üblicherweise durch materialabtragende Verfahren und insbesondere durch Fräsen und/oder Schleifen. Es ist bevorzugt, dass die maschinelle Bearbeitung durch computer-gesteuerte Fräs- und/oder Schleifvorrichtungen erfolgt. Besonders bevorzugt erfolgt die maschinelle Bearbeitung im Rahmen eines CAD/CAM-Verfahrens.

Die Erfindung betrifft schließlich auch die Verwendung des nach dem erfindungsgemäßen Verfahren hergestellten Glaskeramik-Rohlings zur Herstellung von dentalen Restaurationen, wobei dem Glaskeramik-Rohling durch Pressen oder maschinelle Bearbeitung die Form der dentalen Restaurationen gegeben wird.

Die Erfindung wird nachstehend anhand von Beispielen näher erläutert.

### Beispiele

### Beispiel 1 - Verwendung von Blockresten gleicher Art

Es wurden Reste von kommerziellen CAD/CAM-Blöcken (IPS e.max CAD LT A2 von Ivoclar Vivadent AG) bei einer Temperatur von 1370°C für 2 h zu einem Glas mit hoher Homogenität geschmolzen. Die erhaltene Glasschmelze wurde in Graphitformen zu Blöcken gegossen. Die Glasblöcke wurden in einen auf 500°C vorgewärmten Ofen überführt und dort für 10 min bei 500°C gehalten, um Keime in dem Glas zu erzeugen. Anschließend erfolgte das Entspannen der Blöcke, indem diese im geschlossenen Ofen mit einer Geschwindigkeit von etwa 3 bis 5 K/min auf Raumtemperatur abgekühlt wurden. Die Blöcke wurden dann 20 min bei 700°C wärmebehandelt, um eine Glaskeramik mit Lithiummetasilikat als Hauptkristallphase zu bilden. Die erhaltenen Glaskeramik-Blöcke entsprachen hinsichtlich ihrer Eigenschaften genau denen der kommerziellen Blöcke IPS e.max CAD LT A2, wie insbesondere mittels chemischer Analyse und Röntgenbeugungsanalyse festgestellt werden konnte.

Von den erhaltenen Glaskeramik-Blöcken wurden Scheiben abgesägt und diese Scheiben wurden 10 min bei 850°C wärmebehandelt (Programat-Ofen von Ivoclar Vivadent AG, Standardprogramm für IPS e.max CAD LT A2), um eine Glaskeramik mit Lithiumdisilikat als Hauptkristallphase zu bilden. Die Lab-Werte dieser endkristallisierten Scheiben wurden mittels Spektralphotometer CM-3700d von Konica Minolta bestimmt. Zusätzlich wurde auch deren Kontrastwert (CR-Wert) als Maß für die Transluzenz gemäß British Standard BS 5612 bestimmt. In der nachstehenden Tabelle sind die erhaltenen Werte denen von endkristallisierten kommerziellen Blöcken IPS e.max CAD LT A2 als Standard gegenübergestellt.

| | L* | a* | b* | CR-Wert | ΔE* |
|---|---|---|---|---|---|
| Standard | 78, 66 | 5, 65 | 25,60 | 77,43 | - |
| Beispiel 1 | 79, 03 | 5, 17 | 24, 93 | 77, 92 | 0, 91 |

Der geringe Farbabstand ΔE* von nur 0,91 belegt, dass zwischen den hergestellten Blöcken und den kommerziellen Blöcken kein wahrnehmbarer Farbunterschied im endkristallisierten Zustand besteht. Zudem ist auch der Unterschied im Kontrastwert nur marginal, so dass insgesamt die optischen Eigenschaften der hergestellten Blöcke genau denen der kommerziellen Blöcke entsprechen.

Schließlich ergaben sowohl die chemische Analyse als auch die Röntgenbeugungsanalyse, dass die hergestellten Blöcke auch hinsichtlich ihrer Zusammensetzung genau den kommerziellen Blöcken entsprechen.

### Beispiel 2 - Verwendung von Blockresten unterschiedlicher Art

Es wurden Reste von kommerziellen CAD/CAM-Blöcken, nämlich 50 Gew.-% IPS e.max CAD LT A1 und 50 Gew.-% e.max CAD BL2 (jeweils von Ivoclar Vivadent AG), gemischt, und die Mischung wurde bei einer Temperatur von 1370°C für 2 h zu einem Glas geschmolzen. Das Glas wurde dann durch Eingießen in Wasser gefrittet und die chemische Zusammensetzung der erzeugten Ausgangsfritte wurde durch Analysen bestimmt.

Auf der Grundlage dieser Analysen wurde eine Korrekturfritte berechnet und hergestellt, die zusammen mit der Ausgangsfritte geeignet ist, kommerzielle CAD/CAM-Blöcke des Typs IPS e.max CAD LT A2 als Endprodukt herzustellen. Die chemische Zusammensetzung der Korrekturfritte ist in der nachstehenden Tabelle angegeben.

### Chemische Zusammensetzung Korrekturfritte

| Komponente | Gew.-% |
|---|---|
| SiO₂ | 70, 36 |
| Li₂O | 14, 91 |
| K₂O | 3, 99 |
| Al₂O₃ | 3,25 |
| P₂O₅ | 3, 16 |
| ZrO₂ | 0, 78 |
| CeO₂ | 2, 61 |
| V₂O₅ | 0,15 |
| Tb₄O₇ | 0,51 |
| Er₂O₃ | 0,28 |

Die Ausgangsfritte und die Korrekturfritte wurden im Verhältnis von 50 Gew.-% zu 50 Gew.-% gemischt und die Mischung wurde erneut bei 1370°C für 2 h aufgeschmolzen.

Die erhaltene Glasschmelze wurde in Graphitformen zu Blöcken gegossen. Die Glasblöcke wurden in einen auf 500°C vorgewärmten Ofen überführt und dort für 10 min bei 500°C gehalten, um Keime in dem Glas zu erzeugen. Anschließend erfolgte das Entspannen der Blöcke, indem diese im geschlossenen Ofen mit einer Geschwindigkeit von etwa 3 bis 5 K/min auf Raumtemperatur abgekühlt wurden. Die Blöcke wurden dann 20 min bei 700°C wärmebehandelt, um eine Glaskeramik mit Lithiummetasilikat als Hauptkristallphase zu bilden. Die erhaltenen Glaskeramik-Blöcke entsprachen hinsichtlich ihrer Eigenschaften genau denen der kommerziellen Blöcke IPS e.max CAD LT A2, wie insbesondere mittels chemischer Analyse und Röntgenbeugungsanalyse festgestellt werden konnte.

Von den erhaltenen Glaskeramik-Blöcken wurden Scheiben abgesägt und diese Scheiben wurden 10 min bei 850°C wärmebehandelt (Programat-Ofen von Ivoclar Vivadent AG, Standardprogramm für IPS e.max CAD LT A2), um eine Glaskeramik mit Lithiumdisilikat als Hauptkristallphase zu bilden. Die Lab-Werte dieser endkristallisierten Scheiben wurden mittels Spektralphotometer CM-3700d von Konica Minolta bestimmt. Zusätzlich wurde auch deren Kontrastwert (CR-Wert) als Maß für die Transluzenz gemäß British Standard BS 5612 bestimmt. In der nachstehenden Tabelle sind die erhaltenen Werte denen von endkristallisierten kommerziellen Blöcken IPS e.max CAD LT A2 als Standard gegenübergestellt.

| | L* | a* | b* | CR-Wert | ΔE* |
|---|---|---|---|---|---|
| Standard | 78, 66 | 5, 65 | 25,60 | 77,43 | - |
| Beispiel 2 | 79, 29 | 5, 17 | 25, 69 | 76, 67 | 0, 80 |

Der geringe Farbabstand ΔE* von nur 0,80 belegt, dass zwischen den hergestellten Blöcken und den angestrebten kommerziellen Blöcken des Typs IPS e.max CAD LT A2 kein wahrnehmbarer Farbunterschied im endkristallisierten Zustand besteht. Zudem ist auch der Unterschied im Kontrastwert nur marginal, so dass insgesamt die optischen Eigenschaften der hergestellten Blöcke genau denen der gewünschten kommerziellen Blöcke entsprechen.

Schließlich ergaben sowohl die chemische Analyse als auch die Röntgenbeugungsanalyse, dass die hergestellten Blöcke auch hinsichtlich ihrer Zusammensetzung genau den gewünschten kommerziellen Blöcken entsprechen.

## Patentansprüche

1. Verfahren zur Herstellung eines Glaskeramik-Rohlings für dentale Zwecke mit Lithiumsilikat als Kristallphase, bei dem
(a) Rohlinge oder Reste von Rohlingen aus Lithiumsilikat-Glaskeramik zu einem Glas geschmolzen werden,
(b) gegebenenfalls das geschmolzene Glas zu einer Glasfritte umgewandelt und die Glasfritte zu einem Glas geschmolzen wird,
(c) das Glas aus Stufe (a) oder (b) zu einem Glas-Rohling geformt wird,
(d) der Glas-Rohling bei einer Temperatur von insbesondere 450 bis 600°C wärmebehandelt wird, um einen Glas-Rohling mit Keimen zu bilden,
(e) der Glas-Rohling mit Keimen einer Wärmebehandlung bei einer Temperatur von insbesondere 600 bis 850°C unterworfen wird, um einen Glaskeramik-Rohling mit Lithiummetasilikat als Kristallphase zu bilden, oder einer Wärmebehandlung bei einer Temperatur von insbesondere 700 bis 1000°C unterworfen wird, um einen Glaskeramik-Rohling mit Lithiumdisilikat als Kristallphase zu bilden,
(f) gegebenenfalls der Glaskeramik-Rohling mit Lithiummetasilikat als Kristallphase aus Stufe (e) einer Wärmebehandlung bei einer Temperatur von insbesondere 700 bis 1000°C unterworfen wird, um einen Glaskeramik-Rohling mit Lithiumdisilikat als Kristallphase zu bilden, und
(g) gegebenenfalls in der Stufe (a) und/oder (b) mindestens eine chemische Verbindung zugegeben wird, um die chemische Zusammensetzung des Glases und/oder der Glasfritte zu ändern.

2. Verfahren nach Anspruch 1, bei dem in Stufe (a) Reste von maschinell bearbeiteten Rohlingen eingesetzt werden.

3. Verfahren nach Anspruch 1 oder 2, bei dem in Stufe (a) die Lithiumsilikat-Glaskeramik aus Lithiummetasilikat-Glaskeramik und Lithiumdisilikat-Glaskeramik ausgewählt ist und insbesondere Lithiummetasilikat-Glaskeramik ist.

4. Verfahren nach einem der Ansprüche 1 bis 3, bei dem in Stufe (a) Rohlinge in Form von Blöcken oder Zylindern, insbesondere in Form von Scheiben, oder Reste dieser Rohlinge eingesetzt werden.

5. Verfahren nach einem der Ansprüche 1 bis 4, bei dem in Stufe (a) Rohlinge oder Reste von Rohlingen mit unterschiedlicher chemischer Zusammensetzung eingesetzt werden und bevorzugt auch Stufe (g) durchgeführt wird.

6. Verfahren nach einem der Ansprüche 1 bis 5, bei dem in Stufe (a) die Rohlinge oder Reste von Rohlingen und/oder in Stufe (b) die Glasfritte bei einer Temperatur von 1200 bis 1600°C, insbesondere 1250 bis 1450°C, zu einem Glas geschmolzen werden.

7. Verfahren nach einem der Ansprüche 1 bis 6, bei dem in Stufe (a) die Rohlinge oder Reste von Rohlingen und/oder in Stufe (b) die Glasfritte für eine Dauer von 30 bis 300 min, insbesondere 30 bis 240 min, zu einem Glas geschmolzen werden.

8. Verfahren nach einem der Ansprüche 1 bis 7, bei dem in Stufe (c) das Glas durch Gießen in eine Form zu einem Glas-Rohling geformt wird.

9. Verfahren nach einem der Ansprüche 1 bis 8, bei dem der hergestellte Glaskeramik-Rohling Lithiummetasilikat oder Lithiumdisilikat als Kristallphase und insbesondere als Hauptkristallphase aufweist.

10. Verfahren zur Herstellung von dentalen Restaurationen, bei dem Glaskeramik-Rohling gemäß dem Verfahren nach einem der Ansprüche 1 bis 9 hergestellt wird und dem hergestellten Glaskeramik-Rohling durch Pressen oder maschinelle Bearbeitung die Form der dentalen Restaurationen gegeben wird.

11. Verwendung des gemäß dem Verfahren nach einem der Ansprüche 1 bis 9 hergestellten Glaskeramik-Rohlings zur Herstellung von dentalen Restaurationen, wobei dem Glaskeramik-Rohling durch Pressen oder maschinelle Bearbeitung die Form der dentalen Restaurationen gegeben wird.

## Claims

1. Process for the production of a glass-ceramic blank for dental purposes with lithium silicate as crystal phase, wherein
(a) blanks or residues of blanks of lithium silicate glass-ceramic are melted to form a glass,
(b) optionally, the molten glass is converted into a glass frit and the glass frit is melted to form a glass,
(c) the glass from step (a) or (b) is shaped into a glass blank,
(d) the glass blank is heat treated at a temperature of in particular 450 to 600°C to form a glass blank with nuclei,
(e) the glass blank with nuclei is subjected to a heat treatment at a temperature of in particular 600 to 850°C to form a glass-ceramic blank with lithium metasilicate as crystal phase, or to a heat treatment at a temperature of in particular 700 to 1000°C to form a glass-ceramic blank with lithium disilicate as crystal phase,
(f) optionally the glass-ceramic blank with lithium metasilicate as crystal phase from step (e) is subjected to a heat treatment at a temperature of in particular 700 to 1000°C to form a glass-ceramic blank with lithium disilicate as crystal phase, and
(g) optionally at least one chemical compound is added in step (a) and/or (b) to change the chemical composition of the glass and/or the glass frit.

2. Process according to claim 1, wherein in step (a) residues of machined blanks are used.

3. Process according to claim 1 or 2, wherein in step (a) the lithium silicate glass-ceramic is selected from lithium metasilicate glass-ceramic and lithium disilicate glass-ceramic and is in particular lithium metasilicate glass-ceramic.

4. Process according to any one of claims 1 to 3, wherein in step (a) blanks in the form of blocks or cylinders, in particular in the form of discs, or residues of these blanks are used.

5. Process according to any one of claims 1 to 4, wherein in step (a) blanks or residues of blanks with different chemical composition are used and preferably step (g) is also carried out.

6. Process according to any one of claims 1 to 5, wherein in step (a) the blanks or residues of blanks and/or in step (b) the glass frit are melted at a temperature of 1200 to 1600°C, in particular 1250 to 1450°C, to form a glass.

7. Process according to any one of claims 1 to 6, wherein, in step (a) the blanks or residues of blanks and/or in step (b) the glass frit are melted to form a glass for a period of 30 to 300 min, in particular 30 to 240 min.

8. Process according to any one of claims 1 to 7, wherein in step (c) the glass is shaped into a glass blank by casting into a mould.

9. Process according to any one of claims 1 to 8, wherein the glass-ceramic blank produced comprises lithium metasilicate or lithium disilicate as crystal phase and in particular as main crystal phase.

10. Process for preparing dental restorations, wherein glass-ceramic blank is produced according to the process of any one of claims 1 to 9, and the produced glass-ceramic blank is given the shape of the dental restorations by pressing or machining.

11. Use of the glass-ceramic blank produced according to the process of any one of claims 1 to 9 for the preparation of dental restorations, wherein the glass-ceramic blank is given the shape of the dental restorations by pressing or machining.

## Revendications

1. Procédé pour la production d'une ébauche en vitrocéramique à des fins dentaires, comportant du silicate de lithium en tant que phase cristalline, dans lequel
(a) des ébauches ou des résidus d'ébauches à base de vitrocéramique à silicate de lithium sont fondu(e)s en un verre,
(b) éventuellement le verre fondu est converti en une fritte de verre et la fritte de verre est fondue en un verre,
(c) le verre provenant de l'étape (a) ou (b) est façonné en une ébauche en verre,
(d) l'ébauche en verre est traitée thermiquement à une température d'en particulier 450 à 600 °C, afin de former une ébauche en verre comportant des germes,
(e) l'ébauche en verre comportant des germes est soumise à un traitement thermique à une température d'en particulier 600 à 850 °C, afin de former une ébauche en vitrocéramique à métasilicate de lithium en tant que phase cristalline, ou à un traitement thermique à une température d'en particulier 700 à 1 000 °C afin de former une vitrocéramique à disilicate de lithium en tant que phase cristalline,
(f) éventuellement l'ébauche en vitrocéramique à métasilicate de lithium en tant que phase cristalline provenant de l'étape (e) est soumise à un traitement thermique à une température d'en particulier 700 à 1 000 °C, afin de former une ébauche en vitrocéramique à disilicate de lithium en tant que phase cristalline, et
(g) éventuellement dans l'étape (a) et/ou l'étape (b) est ajouté au moins un composé chimique, afin de modifier la composition chimique du verre et/ou de la fritte de verre.

2. Procédé selon la revendication 1, dans lequel des résidus d'ébauches usinées mécaniquement sont utilisées dans l'étape (a).

3. Procédé selon la revendication 1 ou 2, dans lequel dans l'étape (a) la vitrocéramique à silicate de lithium est choisie parmi de la vitrocéramique à métasilicate de lithium et de la vitrocéramique à disilicate de lithium et en particulier est de la vitrocéramique à métasilicate de lithium.

4. Procédé selon l'une des revendications 1 à 3, dans lequel des ébauches sous forme de blocs ou de cylindres, en particulier sous forme de disques, ou des résidus de ces ébauches sont utilisé(e)s dans l'étape (a).

5. Procédé selon l'une des revendications 1 à 4, dans lequel des ébauches ou des résidus d'ébauches à différente composition chimique sont utilisé(e)s dans l'étape (a) et de préférence l'étape (g) est également effectuée.

6. Procédé selon l'une des revendications 1 à 5, dans lequel dans l'étape (a) les ébauches ou résidus d'ébauches et/ou dans l'étape (b) la fritte de verre sont fondu(e)s en un verre à une température de 1 200 à 1 600 °C, en particulier de 1 250 à 1 450 °C.

7. Procédé selon l'une des revendications 1 à 6, dans lequel dans l'étape (a) les ébauches ou résidus d'ébauches et/ou dans l'étape (b) la fritte de verre sont fondu(e)s en un verre pendant une durée de 30 à 300 min, en particulier 30 à 240 min.

8. Procédé selon l'une des revendications 1 à 7, dans lequel dans l'étape (c) le verre est façonné en une ébauche en verre par coulée dans un moule.

9. Procédé selon l'une des revendications 1 à 8, dans lequel l'ébauche en vitrocéramique produite comporte du métasilicate de lithium ou du disilicate de lithium en tant que phase cristalline et en particulier en tant que phase cristalline principale.

10. Procédé pour la fabrication de restaurations dentaires, dans lequel une ébauche en vitrocéramique est produite conformément au procédé selon l'une des revendications 1 à 9 et la forme des restaurations dentaires est donnée, par pressage ou usinage mécanique, à l'ébauche en vitrocéramique produite.

11. Utilisation de l'ébauche en vitrocéramique produite conformément au procédé selon l'une des revendications 1 à 9, pour la fabrication de restaurations dentaires, la forme des restaurations dentaires étant donnée, par pressage ou usinage mécanique, à l'ébauche en vitrocéramique.
